# EUROPEAN PATENT SPECIFICATION

(11) **EP 3 842 599 B1**
(45) Date of publication and mention of the grant of the patent: **04.10.2023**
(21) Application number: 19851852.4
(22) Date of filing: 21.02.2019
(51) Int. Cl.: H02S 20/23, E04D 13/00, F24S 25/00, F24S 25/634

(54) **DEVICE FOR ATTACHING FLEXIBLE SOLAR PANELS TO A PVC ROOFING MEMBRANE**
VORRICHTUNG ZUR BEFESTIGUNG VON FLEXIBLEN SOLARPANEELEN AN EINER PVC-DACHBAHN
DISPOSITIF DE FIXATION DE PANNEAUX SOLAIRES FLEXIBLES À UNE MEMBRANE PVC DE TOITURE

(30) Priority: 20.08.2018 RU 2018130115
(43) Date of publication of application: 30.06.2021
(73) Proprietor: Obshchestvo S Ogranichennoi Otvetstvennost'iu "Solartek", Moscow, g. Troitsk, 108841 (RU)
(72) Inventor: IAKOVLEV, Dmitrii Aleksandrovich, Moscow, 119071 (RU)
(74) Representative: Lapienis, Juozas
(86) International application number: PCT/RU2019/000108
(87) International publication number: WO 2020/040658

(56) References cited:
- JP-A- 2013 185 336
- RU-C2- 2 493 338
- US-A1- 2016 176 105
- US-B2- 8 499 524
- US-B2- 9 170 034
- US-B2- 9 551 509
- US-B2- 9 683 369

## Description

### Field of the invention

The invention relates to the field of construction, namely to devices structurally coupled to the roof and can be used to attach flexible solar panels to roofing membranes.

### Background of the invention

A method for installing a photovoltaic solar panel on the roof is known from US patent No. 7900413, the method comprising the installation of a PVC roofing membrane, fastening thereto an additional PVC membrane containing plasticizers compatible with bitumen mastic used for gluing directly flexible solar panels to the roofing. The method allows to significantly improve the quality of gluing flexible solar panels by preventing the plasticizers of the PVC roofing membrane from interacting with a moisture-resistant adhesive composition and, thereby, to reduce the rate of degradation of its adhesion properties in comparison with gluing flexible solar panels directly onto the PVC roofing membrane.

A significant disadvantage of the method is the impossibility of dismantling a solar panel without compromising the integrity of the solar panel itself and the roofing.

A method for installing flexible solar panels on a waterproof roofing according to Japanese Patent Application No. 2013185336 also includes the use of a weather-resistant protective intermediate layer glued between the roofing membrane and the flexible solar panel. According to the method, in the case of PVC membrane roofing, rigid polyvinyl chloride glued with polyurethane glue is used as a protective intermediate layer, and solar panels are glued with bitumen mastic.

In this case, if necessary, the solar panel can be dismantled without compromising the integrity of the roofing, however, further operation of the dismantled solar panel becomes impossible. In addition, the use of a rigid protective intermediate layer limits application range of the method to flat roof areas only.

A system for attaching objects to polymer membranes is known from US patent No. 8499524, the system being taken as a prototype and comprising a solar panel installation plate glued to the polymer membrane and having a protrusion or an opening for fixing an object. Thus, the solar panel is mechanically fastened at the installation site, which allows for it to be freely dismantled while maintaining the integrity of both the roofing and the solar panel itself, despite the use of adhesives.

However, even high-quality moisture-resistant adhesives with a relatively high cost are prone to gradual degradation of adhesion properties when exposed to atmospheric phenomena, which include, first of all, ultraviolet radiation and temperature drops. Other systems for attaching solar panels to roof structures are described in US 2016/176105 A1 and US 9 683 369 B2.

### Summary of the invention

The problem to be solved by the proposed invention is to develop a simple, repairable device for attaching flexible solar panels to a PVC roofing membrane, the design of which is applicable for both flat and curved shapes of the roof surface.

To solve the problem with the specified technical result there is provided a device for attaching flexible solar panels to a PVC roofing membrane, including a flat metal installation element comprising a fastening element in the form of a threaded rod oriented perpendicularly to the plane thereof, laid with the fastening elements on the outside and fixed on the surface of the PVC roofing membrane, wherein the device comprises a plurality of flat metal installation elements that are laid in rows along at least two opposite sides of the solar panel being mounted and at a distance sufficient to accommodate its length and/or width, the installation elements being covered from above with a reinforcing material and then with PVC material such that the attachment rods penetrate through both materials, and the edges of the subsequent material extend beyond the edges of the previous one, wherein the PVC material is connected by welding with protruding edges to the PVC roofing membrane, and clamping elements are slipped over the attachment rods by means of corresponding through openings made therein, and the edges of one or two adjacent flexible solar panels located between the clamping elements and the PVC material are fixed with the aid of nuts screwed onto the attachment rods;
and wherein:
the edges of the PVC material are fastened to the underlying PVC roofing membrane by thermal or cold welding;
the flat metal installation element is a rectangular or other regularly shaped plate made of zinc-plated or stainless steel, and the fastening element in the form of a threaded rod is located at the center of its plane;
the flat metal installation element is a strip made of solid or perforated zinc-plated or stainless steel, and the fastening elements in the form of threaded rods are located along the whole length, along its centerline;
the fastening elements in the form of threaded rods are fixed to the flat metal installation element by welding;
the clamping element can be made in the form of a strip made of metal or plastic, the clamping element can be made in the form of separate plates made of metal or plastic;
a fiberglass or a small cell flexible metal mesh can be used as a reinforcing material;
an elastic seal is provided between the clamping element and the flexible solar panel.

Due to the fact that the fastening elements in the form of threaded rods are located along the whole length along the centerline of the metal installation strip or at the center of a separate installation plate, the proposed device has a symmetrical design, and has a number of advantages, such as an ease of manufacture and convenience in assembly operations. An array of solar panels can be quickly obtained by fastening the edges of two adjacent panels simultaneously. The attachment rod with the nut, the clamping element and the installation element form a detachable mechanical connection, which ensures repairability without compromising the integrity of both the solar panel itself and the membrane roofing. The use of a layer of reinforcing material strengthens the structure and the weld between the PVC roofing membrane and the PVC layer. Designing the installation element and the clamping element as a separate plate provides for a tight clamping of the solar panel edges at the curved areas of the roof surface.

### Brief description of the drawings

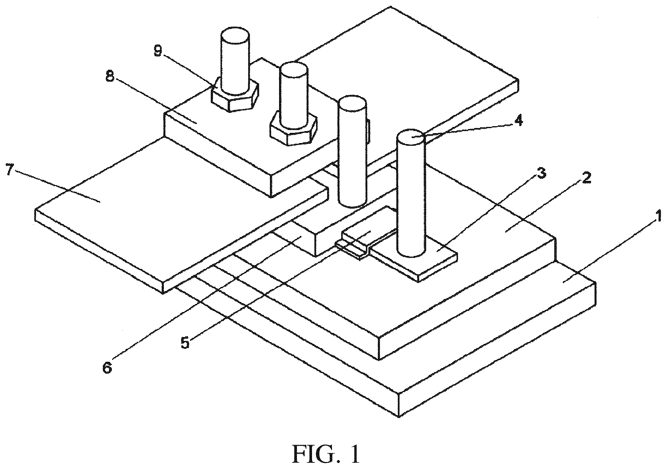

The invention is clearly illustrated in Fig. 1, which schematically shows a fragment of a general view of the proposed device.

A PVC roofing membrane 2 is fastened to a load-bearing base 1. A metal flat installation element 3 in the form of a strip or separate plates comprises fastening elements 4 in the form of threaded rods, oriented perpendicularly to the plane of the installation element. The flat installation element 3 is laid on the surface of the PVC roofing membrane 2 with the attachment rods 4 on the outside and covered from above with a reinforcing material 5, the edges of which extend from all sides beyond the edges of the flat installation element 3, wherein a PVC material 6 is placed over the reinforcing material 5 such that the fastening elements 4 penetrate through both materials, and the edges of the PVC material 6 extend from all sides beyond the edges of the underlying layer of the reinforcing material 5. The PVC material 6 is welded to the underlying PVC roofing membrane 2. A clamping element 8 is slipped over the attachment rods 4 by means of corresponding through openings made therein, and the edges of two adjacent flexible solar panels 7 located between the clamping element 8 and the PVC material 6 are fixed with the aid of a nut 9 screwed onto the attachment rod 4.

### Best embodiment of the invention

The proposed structure is assembled and mounted on the roof as follows.

The installation element 3 and the clamping element 8 are used in the form of a strip on flat roof surfaces, and they are used as separate plates in the areas of the roof with a curved surface. For example, according to the project, a segment of a strip 3 made of solid or perforated zinc-plated steel is adopted for a flat area of the roof. The reinforcing material 5 made of fiberglass mesh is slipped over the attachment rods 4 fixed by welding along the centerline of the strip, then the PVC strip 6 is slipped over the same protruding attachment rods 4. The attachment rods penetrate through both layers of the materials and cover the installation strip. The PVC layer 6 can be made of a material similar to the material of the PVC roofing membrane 2, or different from it in structure or composition, for example, in the content of plasticizers, for example, of LOGICROOF V-SR brand. The assembly obtained in this way is laid with the attachment rods on the outside on the surface of the PVC roofing membrane 2 in a row along the length or width of the solar panel, and the protruding edges of the PVC material 6 are fastened by thermal welding to the underlying PVC roofing membrane 2.

For curved roof areas, the required number of installation elements 3 in the form of separate plates, for example, rectangular or round plates, are used instead of a strip, the attachment rods 4 being fixed by welding at the center thereof perpendicularly to the surface. An assembly similar to the previous one is made using the attachment rods, , it is laid on the surface of the PVC roofing membrane, and the protruding edges of the PVC material are welded thereto. Thus, a first row of installed attachment rods is obtained on the roof surface, to fix one lateral side of the flexible solar panel. The second assembly and subsequent assemblies are mounted similarly to the first one at a distance sufficient to accommodate the width of the solar panel, to install the second row and subsequent rows of attachment rods. If necessary, the similar assemblies are mounted to fix the other two sides of the solar panel, to increase strength.

The flexible solar panels 7 are laid between the rows of the installed attachment rods 4 protruding on the roof surface, wherein the edges of the lateral sides of the panels are located on the PVC layer, with the edges of two adjacent solar panels being located at each side of the attachment rods. Next, the clamping elements 8 made of metal or hard plastic are slipped over the attachment rods 4 by means of corresponding through openings. The elastic seals can be arranged under the clamping elements. The clamping elements in the form of a strip, a strip segment or a separate plate are used at the flat areas, and the clamping elements in the form of a separate plate are used at the curved areas. In a particular case, multiple clamping plates 8 may be provided for one metal element 3. Nuts are screwed onto the attachment rods, and the location of the panels is finally fixed.

### Industrial applicability

It can be seen from the given example of the embodiment that the invention is a simple repairable structure that allows for mounting and dismantling flexible solar panels of any length on the roof, the geometry of which includes irregularities, bends, curves, panes, etc. The proposed structure of the device is fastened without violating the integrity of the membrane roofing, has a low specific weight, and provides for a firm clamping of the flexible solar panel.

The assembly of the device is simple, does not require an additional equipment and the use of expensive adhesives, and does not require highly qualified workers.

## Claims

1. A device for attaching flexible solar panels to a PVC roofing membrane (2) fastened to the load-bearing surface (1) of the roof, including a flat metal installation element (3) comprising a threaded attachment rod (4) fixed perpendicularly to the plane thereof and at the same time mounted and connected to the surface of the PVC roofing membrane with the attachment rod on the outside, **characterized in that** the device comprises a plurality of flat metal installation elements that are laid in rows along at least two opposite sides of the solar panel being mounted and at a distance sufficient to accommodate its length and/or width, the installation elements being covered from above with a reinforcing material (5) and then with PVC material (6) such that the attachment rods penetrate through both materials, and the edges of the subsequent material extend beyond the edges of the previous one, wherein the PVC material is connected by welding with protruding edges to the PVC roofing membrane, and clamping elements (8) are slipped over the attachment rods by means of corresponding through openings made therein, and the edges of one or two adjacent flexible solar panels (7) located between the clamping elements and the PVC material are fixed with the aid of nuts (9) screwed onto the attachment rods.

2. The device of claim 1, wherein the edges of the PVC material are fastened to the underlying PVC roofing membrane by thermal or cold welding.

3. The device of claim 1, wherein the flat metal installation element is a rectangular or other regularly shaped plate made of zinc-plated or stainless steel, and the fastening element in the form of a threaded rod is located at the center of its plane.

4. The device of claim 1, wherein the flat metal installation element is a strip made of solid or perforated zinc-plated or stainless steel, and the fastening elements in the form of threaded rods are located along the whole length, along the centerline of the metal installation strip.

5. The device of claim 1, claim 3, claim 4, wherein the fastening elements in the form of threaded rods are fixed to the flat metal installation element by welding.

6. The device of claim 1, wherein the clamping element can be made in the form of a strip made of metal or plastic.

7. The device of claim 1, wherein the clamping element can be made in the form of separate plates made of metal or plastic.

8. The device of claim 1, wherein a fiberglass or a small cell flexible metal mesh can be used as a reinforcing material.

9. The device of claim 1, wherein an elastic seal is provided between the clamping element and the flexible solar panel.

## Patentansprüche

1. Eine Vorrichtung zur Befestigung von streckbaren Solarpaneelen auf einer PVC-Dachbahn (2), die auf der Lastaufnahmefläche (1) des Daches befestigt wird, bestehend aus einem flachen Metallmontageelement (3) mit einer Gewindebefestigungsstange (4), die senkrecht zu deren Ebene befestigt wird und gleichzeitig auf der Fläche der PVC-Dachbahn mit der Befestigungsstange auf der Außenseite montiert und verbunden wird, **dadurch gekennzeichnet, dass** die Vorrichtung eine Vielzahl von flachen Metallmontageelementen umfasst, die in Reihen entlang mindestens zwei gegenüberliegender Seiten des zu montierenden Solarpaneels und in einem ausreichenden Abstand zur Anpassung an die Länge und/oder Breite verlegt sind, wobei die Metallmontageelemente von oben mit einem Verstärkungsmaterial (5) und anschließend mit PVC-Material (6) abgedeckt werden, so dass die Befestigungsstangen beide Materialien durchdringen und die Kanten des nachfolgenden Materials über die Kanten des vorherigen hinausragen, wobei das PVC-Material durch Schweißen mit überstehenden Kanten mit der PVC-Dachbahn verbunden wird, und Klemmelemente (8) mit entsprechenden, darin eingebrachten Durchgangsöffnungen über die Befestigungsstangen gestülpt werden, und die Kanten eines oder zweier benachbarter streckbarer Solarpaneele (7), die sich zwischen den Klemmelementen und dem PVC-Material befinden, mit auf die Befestigungsstangen aufgeschraubten Muttern (9) fixiert werden.

2. Die Vorrichtung nach Anspruch 1, **dadurch gekennzeichnet, dass** die Kanten des PVC-Materials durch thermisches oder kaltes Schweißen auf der darunter liegenden PVC-Dachbahn befestigt werden.

3. Die Vorrichtung nach Anspruch 1, **dadurch gekennzeichnet, dass** das flache Metallmontageelement eine rechteckige oder andere regelmäßig geformte Platte aus verzinktem oder rostfreiem Stahl ist, und das Befestigungselement in Form einer Gewindestange in der Mitte ihrer Ebene angeordnet ist.

4. Die Vorrichtung nach Anspruch 1, **dadurch gekennzeichnet, dass** das flache Metallmontageelement ein Streifen aus massivem oder perforiertem verzinktem oder rostfreiem Stahl ist, und die Befestigungselemente in Form von Gewindestangen über die gesamte Länge entlang der Mittellinie des Metallmontagestreifens angeordnet sind.

5. Die Vorrichtung nach Anspruch 1, Anspruch 3, Anspruch 4, **dadurch gekennzeichnet, dass** die Befestigungselemente in Form von Gewindestangen durch Schweißen an dem flachen Metallmontageelement befestigt sind.

6. Die Vorrichtung nach Anspruch 1, **dadurch gekennzeichnet, dass** das Klemmelement in Form eines Streifens aus Metall oder Kunststoff ausgebildet sein kann.

7. Die Vorrichtung nach Anspruch 1, **dadurch gekennzeichnet, dass** das Klemmelement in Form separater Platten aus Metall oder Kunststoff ausgebildet sein kann.

8. Die Vorrichtung nach Anspruch 1, **dadurch gekennzeichnet, dass** als Verstärkungsmaterial ein Glasfaser oder ein kleinzelliges streckbares Metallgeflecht verwendet werden kann.

9. Die Vorrichtung nach Anspruch 1, **dadurch gekennzeichnet, dass** zwischen dem Klemmelement und dem streckbaren Solarpaneel eine elastische Dichtung vorgesehen ist.

## Revendications

1. Un dispositif de fixation de panneaux solaires souples sur une membrane (2) de toiture en PVC fixée sur une surface (1) portante du toit, comprenant un élément (3) d'installation métallique plat comprenant une tige (4) de fixation filetée fixée perpendiculairement à son plan et en même temps montée et connectée à la surface de la membrane de toiture en PVC avec la tige de fixation à l'extérieur, **caractérisé en ce que** le dispositif comprend pluralité d'éléments d'installation métalliques plats qui sont disposés en rangées le long d'au moins deux côtés opposés du panneau solaire à monter et à une distance suffisante pour s'adapter à sa longueur et/ou sa largeur, les éléments d'installation étant recouverts de ci-dessus avec un matériau (5) de renfort puis avec un matériau (6) PVC de sorte que les tiges de fixation pénètrent à travers les deux matériaux, et les bords du matériau suivant s'étendent au-delà des bords du précédent, le matériau PVC étant relié par soudage avec des bords saillants à la membrane de toiture en PVC, et des éléments (8) de serrage sont glissés sur les tiges de fixation au moyen d'ouvertures traversantes correspondantes prévues dans celles-ci, et les bords d'un ou de deux panneaux (7) solaires flexibles adjacents situés entre les éléments de serrage et le matériau PVC sont fixés à l'aide d'écrous (9) vissés sur les tiges de fixation.

2. Le dispositif selon la revendication 1, **caractérisé en ce que** les bords du matériau PVC sont fixés à la membrane de toiture en PVC subjacente par soudage thermique ou à froid.

3. Le dispositif selon la revendication 1, **caractérisé en ce que** l'élément d'installation métallique plat est une plaque rectangulaire ou autre de forme régulière en acier zingué ou inoxydable, et l'élément de fixation en forme de tige filetée est situé au centre de son plan.

4. Le dispositif selon la revendication 1, **caractérisé en ce que** l'élément d'installation métallique plat est une bande en acier zingué ou inoxydable plein ou perforé, et les éléments de fixation en forme de tiges filetées sont situés sur toute la longueur, le long de l'axe de la bande d'installation métallique.

5. Le dispositif selon la revendication 1, la revendication 3, la revendication 4, **caractérisé en ce que** les éléments de fixation en forme de tiges filetées sont fixés à l'élément d'installation métallique plat par soudage.

6. Le dispositif selon la revendication 1, **caractérisé en ce que** l'élément de serrage peut être réalisé sous la forme d'un bande en métal ou en plastique.

7. Le dispositif selon la revendication 1, **caractérisé en ce que** l'élément de serrage peut être réalisé sous la forme de plaques séparées en métal ou en plastique.

8. Le dispositif selon la revendication 1, **caractérisé en ce que** une fibre de verre ou un treillis métallique flexible à petites cellules peut être utilisé comme matériau de renforcement.

9. Le dispositif selon la revendication 1, **caractérisé en ce que** un joint étanche élastique est prévu entre l'élément de serrage et le panneau solaire flexible.
